Europäisches Patentamt

European Patent Office

Office européen des brevets

(19)

(11) Veröffentlichungsnummer: **0 195 830**
**B1**

(12) # EUROPÄISCHE PATENTSCHRIFT

(45) Veröffentlichungstag der Patentschrift:
**21.09.88**

(21) Anmeldenummer: **85103482.7**

(22) Anmeldetag: **23.03.85**

(51) Int. Cl.⁴: **H 01 R 35/00**, B 60 R 21/08

(54) **Elektrische Kontakteinrichtung für Gassack-Aufprall-Schutzeinrichtung in Kraftfahrzeugen.**

(43) Veröffentlichungstag der Anmeldung:
**01.10.86 Patentblatt 86/40**

(45) Bekanntmachung des Hinweises auf die Patenterteilung:
**21.09.88 Patentblatt 88/38**

(84) Benannte Vertragsstaaten:
**DE FR GB NL SE**

(56) Entgegenhaltungen:
**DE-A-3 108 757**

(73) Patentinhaber: **Petri AG, Bahnweg 1, D-8750 Aschaffenburg (DE)**

(72) Erfinder: **Zeller, Gregor, Jahnstrasse 70, D-8750 Aschaffenburg (DE)**

(74) Vertreter: **Eyer, Eckhardt Philipp, Dipl.- Ing., Patentanwälte Eyer & Linser Robert- Bosch- Strasse 12a, D-6072 Dreieich (DE)**

EP 0 195 830 B1

## Beschreibung

Die Erfindung betrifft eine elektrische Kontakteinrichtung für Gassack-Aufprall-Schutzeinrichtungen in Kraftfahrzeugen, bestehend aus einem an der Lenkradnabe bezw. der Lenkspindel angeordneten, sich mit der Lenkradnabe drehenden Kontakt und einem gestellfest angeordneten, die Lenkspindel konzentrisch umgebenden Gegenkontaktbahn, wobei der Kontakt mittels Federkraft in ständigem Schleifkontakt an der Gegenkontaktbahn gehalten wird.

Bei den bekannten Schleifkontakten dieser Art besteht der am drehenden Teil, etwa der Lenkspindel bezw. an der Lenkradnabe angeordnete Kontakt aus einem Schleifring und der am feststehenden Teil, beispielsweise am Kontaktgehäuse angeordnete Teil aus einer oder mehreren Kontaktfedern (z. B. DE-A-3 108 757) oder von einem Metalldrahtbündel gebildeten Bürsten. Hierbei haben die Federkontakte den wesentlichen Nachteil, daß sie bei extremen Verzögerungen, etwa in einer Unfallsituation, von der Gegenkontaktbahn abheben und die Stromleitung unterbrechen können, so daß die Gassack-Aufprall-Schutzeinrichtung im entscheidenden Zeitpunkt wirkungslos wird, während Bürstenkontakte zu erhöhtem Abrieb neigen, wodurch die Gefahr von Fehlfunktionen infolge Änderung des Kontaktdruckes eintritt.

Der vorliegenden Erfindung liegt als Aufgabe die Schaffung einer elektrischen Kontakteinrichtung für Gassack-Aufprall-Schutzeinrichtungen in Kraftfahrzeugen zugrunde, die dauerhaft eine sichere Stromübertragung von dem gestellfesten Kontakt zu der mit dem Lenkrad drehenden Gegenkontaktbahn gewährleistet und die Erfindung besteht darin, die Gegenkontaktbahn in der Bodenwanne eines ringförmigen Gehäuses angeordnet und der als Kontaktring ausgebildete Kontakt in der Ringnut eines die Bodenwanne umgreifenden Deckels geführt ist, wobei der Kontaktring mittels einer Anzahl von zwischen Kontaktring und Nutgrund gehaltener Federn gegen die Gegenkontaktbahn gehalten wird.

Durch die Erfindung ist eine elektrische Kontakteinrichtung für Gassack-Aufprall-Schutzeinrichtungen in Kraftfahrzeugen geschaffen, die dauerhaft eine sichere Stromübertragung von dem gestellfesten Kontakt zu der mit dem Lenkrad drehenden Gegenkontaktbahn gewährleistet dadurch, daß sowohl der Kontakt als auch der Gegenkontakt von aufeinander reibenden Ringelementen gebildet sind, die unabhängig von ihrer Lage und Belastung in einem zumindest punktförmigen Kontakt gehalten sind.

Der Kontaktring kann als einfacher, ebene glatte Kontaktflächen aufweisender Ring ausgebildet sein, vorteilhaft weist er jedoch die Form eines Kammringes mit ballig abgerundeten Kammspitzen auf, wodurch eine größere Zahl von Kontaktstellen und damit eine größere Sicherheit in Bezug auf die Stromleitung erreicht wird. Hierbei kann der Kontaktring aus Metall oder vorteilhaft Metallgraphit bestehen, das eine größere Abriebfestigkeit bei verbesserten Leitereigenschaften besitzt. Der Stromleitungsverbinder kann in dem ringförmigen Gehäuse mehrere Kontakt- und Gegenkontaktbahnen konzentrisch zueinander aufweisen, wodurch die Funktionssicherheit der Gassack-Aufprall-Schutzeinrichtung weiterhin erhöht werden kann.

In einer besonders vorteilhaften Ausführungsform sind die Bodenwanne und der Deckel mittels in Ringnute mit Spiel eingreifender Ringstege ineinander geführt und der Deckel mit der Bodenwanne mittels mehrerer am Deckelrand angeordneter, die Bodenwanne umgreifender Clipsnasen zusammengeclipst sind, wobei die Dimensionierung derart getroffen ist, daß der Deckel und die Bodenwanne bei der Montage von der auf die Lenkspindel aufgeschraubten Lenkradnabe gegen die Kraft der den Kontaktring beaufschlagenden Federn unter Freigabe der Clipsnasen geringfügig zusammengedrückt werden. Auf diese Weise wird die Möglichkeit geschaffen, den Stromleitungsverbinder als vormontierte Einheit fertigzustellen, wobei ein einfacher und problemloser Einbau im Lenkrad gewährleistet ist.

Die Erfindung ist in der Zeichnung anhand eines Ausführungsbeispieles veranschaulilcht. Es zeigen

Fig. 1 einen Schnitt durch einen Stromleitungsverbinder gemäß Erfindung

Fig. 2 eine teilgeschnittene Sicht von oben auf Fig. 1

Fig. 3 die perspektivische Teildarstellung eines Kontaktringes

Fig. 4 die perspektivische Teildarstellung einer anderen Ausführungform eines Kontaktringes

Die in der Zeichnung wiedergegebene elektrische Kontakteinrichtung für Gassack-Aufprall-Schutzeinrichtungen in Kraftfahrzeugen besteht aus einem an der Lenkradnabe 1 bezw. der Lenkspindel 2 angeordneten, sich mit der Lenkradnabe drehenden Kontakt 3 und einer gestellfest angeordneten, die Lenkspindel konzentrisch umgebenden Gegenkontaktbahn 4, wobei der Kontaktring 3 durch Federkraft in ständigem Schleifkontakt an der Gegenkontaktbahn 4 gehalten wird. Die Gegenkontaktbahn 4 ist in der Bodenwanne 7 eines ringförmigen Gehäuses angeordnet und der als Kontaktring 3 ausgebildete Kontakt in der Ringnut 10 eines die Bodenwanne 7 umgreifenden Deckels 11 geführt, wobei der Kontaktring 3 mittels einer Anzahl von zwischen Kontaktring 3 und Nutgrund gehaltener Federn 12 gegen die Gegenkontaktbahn 4 gehalten wird. Der Kontaktring kann in der in Fig. 3 wiedergegebenen Weise als glattflächig ebener Ring ausgebildet sein, vorteilhaft weist er jedoch in der in Fig. 4 wiedergegebenen Weise die Form eines Kammringes 9 auf, dessen Kammspitzen 13

3

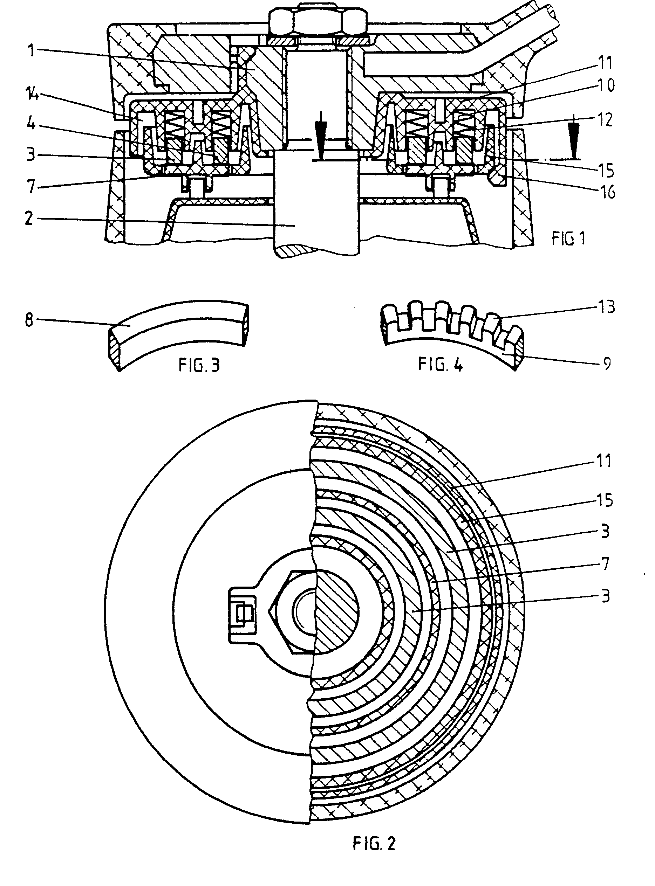

ballig abgerundet sind. Er kann aus Metall oder Metallgraphit bestehen. Vorteilhaft sind - siehe Fig. 2 - in dem ringförmigen Gehäuse mehrere Kontakt- und Gegenkontaktbahnen 3 konzentrisch zueinander angeordnet, wodurch die Sicherheit der Kontaktgabe entsprechend erhöht wird.

Zur Vereinfachung der Montage sind - siehe Fig. 1 - die Bodenwanne 7 und der Deckel 11 mittels in Ringnute 14 mit Spiel eingreifender Ringstege 15 ineinander geführt und der Deckel 11 mit der Bodenwanne 7 mittels mehrerer am Deckelrand angeordneter, die Bodenwanne 7 umgreifender Clipsnasen 16 zusammengeclipst, wobei die Dimensionierung derart getroffen ist, daß der Deckel 11 und die Bodenwanne 7 bei der Montage von der auf die Lenkspindel 2 aufgeschraubten Lenkradnabe I gegen die Kraft der den Kontaktring 8 beaufschlagenden Federn 12 unter Freigabe der Clipsnasen 16 geringfügig zusammengedrückt werden. Zur besseren Führung sind die Ringnute 14 und die Ringstege 15 eine einander entsprechende konische Form aufweisen.

**Patentansprüche**

1. Elektrische Kontakteinrichtung für Gassack-Aufprall-Schutzeinrichtungen in Kraftfahrzeugen, bestehend aus einem an der Lenkradnabe (1) bezw. der Lenkspindel (2) angeordneten, sich mit der Lenkradnabe drehenden Kontakt (3) und einem gestellfest angeordneten, die Lenkspindel konzentrisch umgebenden Gegenkontaktbahn (4), wobei der Kontakt (3) mittels Federkraft (12) in ständigem Schleifkontakt an der Gegenkontaktbahn gehalten wird, dadurch gekennzeichnet, daß die Gegenkontaktbahn (4) in der Bodenwanne (7) eines ringförmigen Gehäuses angeordnet und der als Kontaktring (8, 9) ausgebildete Kontakt (3) in der Ringnut (10) eines die Bodenwanne (7) umgreifenden Deckels (11) geführt ist, wobei der Kontaktring (8, 9) mittels einer Anzahl von zwischen Kontaktring (8) und Nutgrund gehaltener Federn (12) gegen die Gegenkontaktbahn (4) gehalten wird.

2. Elektrische Kontakteinrichtung nach Anspruch 1, dadurch gekennzeichnet, daß der Kontaktring (9) als Kammring (9) ausgebildet ist, dessen Kammspitzen (13) ballig abgerundet sind.

3. Elektrische Kontakteinrichtung nach Anspruch 2, dadurch gekennzeichnet, daß der Kontaktring (8, 9) aus Metall oder Metallgraphit besteht.

4. Elektrische Kontakteinrichtung nach einem der Ansprüche 1 bis 3, dadurch gekennzeichnet, daß in dem ringförmigen Gehäuse mehrere Kontakt- und Gegenkontaktbahnen (4, 8, 9) konzentrisch zueinander angeordnet sind.

5. Elektrische Kontakteinrichtung nach einem der Ansprüche 1 bis 4, dadurch gekennzeichnet, daß die Bodenwanne (7) und der Deckel (11) mittels in Ringnute (14) mit Spiel eingreifender Ringstege (15) ineinander geführt und der Deckel (11) mit der Bodenwanne (7) mittels mehrerer am Deckelrand angeordneter, die Bodenwanne (7) umgreifender Clipsnasen (16) zusammengeclipst sind, wobei die Dimensionierung derart getroffen ist, daß der Deckel (11) und die Bodenwanne (7) bei der Montage von der auf die Lenkspindel (2) aufgeschraubten Lenkradnabe (1) gegen die Kraft der den Kontaktring (8) beaufschlagenden Federn (12) unter Freigabe der Clipsnasen (16) geringfügig zusammengedrückt werden.

6. Elektrische Kontakteinrichtung nach Anspruch 5, dadurch gekennzeichnet, daß die Ringnute (14) und die Ringstege (15) eine einander entsprechende konische Form aufweisen.

**Claims**

1. Electrical contact device for shock-preventing airbag safety systems for motor vehicles, comprising a contact (3), which is disposed on the steering wheel hub (1), or on the steering column (2) respectively, and which rotates with the steering wheel hub, and a counter contact ring (4), which is fixedly disposed on the frame and concentrically surrounds the steering column, the contact (3) being retained on the counter contact ring by the force of spring (12) in sliding contact therewith, characterised in that the counter contact ring (4) is disposed in the trough-shaped base (7) of an annular housing, and the contact (3), which is in the form of contact ring (8, 9), is guided in the annular groove (10) formed in a cover (11) engaging around the trough-shaped base (7), the contact ring (8, 9) being retained against the counter contact ring (4) by means of a number of springs (12) which are retained between the contact ring (8) and the groove base.

2. Electrical contact device according to claim 1, characterised in that the contact ring (9) is in the form of cogged ring (9), the cog tips (13) of which are spherically rounded.

3. Electrical contact device according to claim 2, characterised in that the contact ring (8, 9) is formed from metal or metal graphite.

4. Electrical contact device according to any of claims 1 to 3, characterised in that a plurality of contact and counter contact rings (4, 8, 9) are disposed in the annular housing concentrically relative to one another.

5. Electrical contact device according to any of claims 1 to 4, characterised in that the trough-shaped base (7) and the cover (11) extend into one another by means of annular webs (15) which engage with clearance in annular grooves (14), and the cover (11) and the trough-shaped base (7) are clipped together by means of a plurality of clip-type projections (16) which are disposed on the edge of the cover and engage around the trough-shaped base (7), the dimensions being such that, during the assembly of the steering wheel hub (1) which is screwed onto the steering column (2), the cover (11) and the trough-shaped base (7) are pressed together slightly against the force of the springs (12), which act on the contact ring (8), thereby releasing the clip-type projections (16).

6. Electrical contact device according to claim 5, characterised in that the annular grooves (14) and the annular webs (15) have a conical form corresponding to one another.

**Revendications**

1. Dispositif de contact électrique pour des systèmes de protection anti-choc a sac gonflable dans des véhicules automobiles, se composant d'un contact (3) qui est monté sur le moyeu de volant (1) ou l'axe de direction (2) et qui tourne avec le moyeu de volant, et d'une voie de contact antagoniste (4) qui est montée en position fixe sur le châssis et qui entoure concentriquement l'axe de direction, le contact (3) étant maintenu par la force d'un ressort (12) en contact glissant constant avec la voie de contact antagoniste, caractérisé en ce que la voie de contact antagoniste (4) est disposée dans la cuvette de fond (7) d'un boîtier annulaire et en ce que le contact (3), réalisé sous forme de bague de contact (8, 9), est guidé dans la rainure annulaire, (10) d'un couvercle (11) qui enveloppe la cuvette de fond (7), la bague de contact (8, 9) étant maintenue contre la voie de contact antagoniste (4) au moyen de plusieurs ressorts (12) retenus entre la bague de contact (8) et le fond de la rainure.

2. Dispositif de contact électrique selon la revendication 1, caractérisé en ce que la bague de contact est réalisée sous forme de bague dentée (9) dont les pointes de dents (13) sont arrondies avec une forme bombée.

3. Dispositif de contact électrique selon la revendication 2, caractérisé en ce que la bague de contact (8, 9) est faite de métal ou de métal-graphite.

4. Dispositif de contact électrique selon l'une quelconque des revendications 1 à 3, caractérisé en ce que plusieurs contacts et voies de contact antagonistes (4, 8, 9) sont disposés en position mutuellement concentrique dans le boîtier annulaire.

5. Dispositif de contact électrique selon l'une quelconque des revendications 1 à 4, caractérisé en ce que la cuvette de fond (7) et le couvercle (11) sont introduits l'un dans l'autre en position guidée au moyen de nervures annulaires (15) qui pénètrent avec du jeu dans des rainures annulaires, (14) et le couvercle (11) est assemblé a la cuvette de fond (7) par encliquetage au moyen de plusieurs ergots d'encliquetage (16) disposés sur le bord du couvercle et saisissant tout autour la cuvette de fond (7), le dimensionnement étant effectué de telle manière que lors du montage, le couvercle (11) et la cuvette de fond (7) soient légèrement comprimés, avec libération des ergots d'encliquetage (16), par le vissage du moyeu de volant (1) sur l'axe de direction (2), contre la force antagoniste des ressorts (12) qui sollicitent la bague de contact (8).

6. Dispositif de contact électrique selon la revendication 5, caractérisé en ce que les rainures annulaires (14) et les nervures annulaires (15) présentent des formes coniques mutuellement correspondantes.

FIG 1

FIG. 3

FIG. 4

FIG. 2